(19) Europäisches Patentamt / European Patent Office / Office européen des brevets

(11) **EP 1 658 471 B1**

(12) **EUROPÄISCHE PATENTSCHRIFT**

(45) Veröffentlichungstag und Bekanntmachung des Hinweises auf die Patenterteilung:
**17.01.2007  Patentblatt 2007/03**

(21) Anmeldenummer: 04786172.9

(22) Anmeldetag: **20.08.2004**

(51) Int Cl.:
*G01B 21/04* (2006.01)

(86) Internationale Anmeldenummer:
**PCT/DE2004/001874**

(87) Internationale Veröffentlichungsnummer:
**WO 2005/019769 (03.03.2005 Gazette 2005/09)**

(54) **VERFAHREN ZUR ERMITTLUNG SYSTEMATISCHER GEOMETRISCHER ABWEICHUNGEN IN TECHNISCHEN MEHRKÖRPERSYSTEMEN**

METHOD FOR THE DETERMINATION OF SYSTEMATIC GEOMETRIC DEVIATIONS IN TECHNICAL MULTI-BODY SYSTEMS

PROCEDE PERMETTANT DE DETERMINER DES ECARTS GEOMETRIQUES SYSTEMATIQUES DANS DES SYSTEMES TECHNIQUES A PLUSIEURS CORPS

(84) Benannte Vertragsstaaten:
**CH ES FR GB IT LI SE**

(30) Priorität: **22.08.2003  DE 10339194**

(43) Veröffentlichungstag der Anmeldung:
**24.05.2006  Patentblatt 2006/21**

(73) Patentinhaber:
• **B.R. Deutschland, vertr.d.d. Bundesministerium f.**
  **Wirtschaft u. Arbeit, dieses vertr.d.d. Präs. d. Phys.-Techn. Bundesanstalt**
  **38116 Braunschweig (DE)**
• **National Physical Laboratory**
  **Middlsesex, TW11 OLW (GB)**

(72) Erfinder:
• **SCHWENKE, Heinrich, Iven**
  **38106 Braunschweig (DE)**
• **HANNAFORD, John**
  **Broadwoodwidger,**
  **Devon PL 16 OES (GB)**
• **WENDT, Klaus**
  **38536 Meinersen (DE)**

(74) Vertreter: **Stornebel, Kai et al**
  **Gramm, Lins & Partner GbR,**
  **Theodor-Heuss-Strasse 1**
  **38122 Braunschweig (DE)**

(56) Entgegenhaltungen:
EP-A- 0 684 447     EP-A- 1 239 263
DE-A- 10 126 753    DE-A- 19 947 374

**Beschreibung**

Die Erfindung betrifft ein Verfahren zur Ermittlung systematischer geometrischer Abweichungen in technischen Mehrkörpersystemen mit einem Endeffektor und einer Basis, insbesondere Koordinatenmessgeräte, Werkzeugmaschinen und Robotern, unter Verwendung eines oder mehrere schwenkbarer Längenmesssysteme, bei dem der Endeffektor Messpunkte anfährt und an jedem Messpunkt zwischen Basisreferenzpunkten, die ortsfest zu der Basis sind, und Endeffektorreferenzpunkten, die ortsfest zu dem Endeffektor sind, der Abstand durch zumindest ein Längenmesssystem gemessen wird.

Es sind zahlreiche Verfahren zur Bestimmung der systematischen Abweichungen von technischen Mehrkörpersystemen bekannt. Diese umfassen die Verwendung von Laserinterferometern, Normalen, Photogrammetrischen Messverfahren, Intertial-Messverfahren und andere Verfahren. Die Vielzahl der technischen Lösungen zeigt die große technische und wirtschaftliche Bedeutung des Problemfeldes. Die wesentlichen Kriterien für die Qualität eines solchen Verfahrens sind die erreichbare Genauigkeit, die Wirtschaftlichkeit und die Praktikabilität, insbesondere im industriellen Umfeld.

Bei einer Verwendung spezifischer Messmittel für translatorische und rotatorische Abweichungen in jeder Bewegungsachse werden die Abweichungen in jedem Freiheitsgrad und jeder Achse durch gesonderte Messeinrichtungen aufgenommen. Dazu müssen verschiedene Messmittel verwendet werden. Für die Ermittlung der Positionsabweichungen werden Michelson-Laserinterferometer oder Maßstäbe eingesetzt, für die Ermittlung der Geradheitsabweichungen Lineale oder Interferometer in Wolleston-Anordnung und für die Ermittlung der rotatorischen Abweichungen Neigungsmesser oder Differenzlaser. Die große Anzahl verschiedener Messmittel und die zeitaufwendigen Umbau- und Justierarbeiten machen solche Verfahren sehr unwirtschaftlich. Außerdem eignet sich die Anwendung spezifischer Messmittel nicht zur Prüfung von Maschinen, deren bekannte systematische Abweichungen bereits bei der Positionierung oder Messung kompensiert werden, da nur tatsächliche (physikalische) Führungsabweichungen erfasst werden und nicht solche, die nach einer numerischen Korrektur verblieben sind.

Aus den genannten Gründen werden in den letzten Jahren verstärkt Verfahren unter Verwendung zweidimensionaler Referenzkörper angewendet, die durch Messung der zweidimensionalen, kalibrierten Normalen eine vollständige Ermittlung der überlagerten Geometrieabweichungen gestattet. Das Normal oder der Referenzkörper ist dabei im Allgemeinen mit kugel- oder zylinderförmigen Antastformelementen versehen. Die Messabweichungen, also die Differenz zwischen den angezeigten Messwerten und den kalibrierten Werten des Normals resultieren dabei aus einer Überlagerung der geometrischen Abweichungen des Messsystems. Üblicherweise wird eine Analyse der ermittelten Messabweichungen derart durchgeführt, dass die einzelnen geometrischen Abweichungen der Führungsbahnen daraus durch rechnergestützte, mathematische Verfahren bestimmt werden. Diese Verfahren sind im wissenschaftlichen Rahmen erprobt und mittlerweile auch bei Koordinatenmessgeräten kleinerer und mittlerer Baugröße vielfach im industriellen Einsatz. Bei großen Koordinatenmessgeräten mit Längen der Bewegungsachsen über 1 Meter ist dieses Verfahren schwer einsetzbar, weil geeignete Normale ausreichender Genauigkeit technisch kaum mehr realisierbar sind. Normale dieser Größenordnung sind unhandlich, und es lässt sich mit ihnen keine ausreichende Stabilität der verkörperten Maße erreichen. Ein weiterer Nachteil des Verfahrens ist, dass die verwendeten Normale in ihrer Größe auf die technischen Mehrkörpersysteme wie Koordinatenmessgeräte abgestimmt sein müssen.

Ein drittes Verfahren betrifft die Multilateration zur Genauigkeitssteigerung von Koordinatenmessgeräten oder zur Kalibrierung von Koordinatenmessgeräten und Robotern, bei dem durch das Messprinzip der Trilateration die Messgenauigkeit von Koordinatenmessungen erhöht werden soll. Dabei werden mehrere schwenkbare Interferometer einem gemeinsamen Retroreflektor automatisch nachgeführt. Durch gleichzeitige Auswertung der Längenmessung aller Interferometer lässt sich dann die Position des Reflektors im Raum bestimmen. Dieses Verfahren kann auch zur Aufnahme der Abweichungen von Koordinatenmessgeräten oder Industrierobotern verwendet werden, hat jedoch den Nachteil, dass sich selbst bei Verwendung eines sogenannten "Full angle catseye"- Retroreflektors bei Einsatz von nur drei oder vier schwenkbaren Interferometern keine gleichmäßigen Positionsunsicherheiten im Raum erzielen lassen, da der Schnittwinkel der Messstrahlen stark mit der Relativposition des Retroreflektors zu den schwenkbaren Interferometern variiert. Die gleichzeitige Verwendung von vier oder mehr schwenkbaren Interferometern erfordert erhebliche Investitionskosten. Bei der Verwendung von schwenkbaren Interferometern für die Kalibrierung technischer Mehrkörpersysteme durch einfache Positionsbestimmung des Retroreflektors lassen sich die rotatorischen Abweichungen nicht von den translatorischen Abweichungen trennen. Eine vollständige analytische Erfassung aller Geometrieabweichungen ist deshalb nicht möglich.

Ein viertes Verfahren zur Bestimmung von Abweichungen ist die Erzeugung von zweidimensionalen Netzen durch sequentielle Multilateration gemäß der gattungsbildenden DE 199 47 374 A1. In diesem Verfahren werden Lasertracker zur Generierung eines zweidimensionalen "virtuellen Prüfkörpers" verwendet. Ein einzelner "virtueller Prüfkörper", der mindestens drei, im Allgemeinen vier Lastertracker-Positionen erfordert, gibt dabei nur Informationen über die Abweichungen in genau einer Messebene. Wenn das Verfahren in Verbindung mit dem Verfahren unter Verwendung zweidimensionaler Referenzkörper eingesetzt wird, lassen sich die systematischen Abweichungen vollständig erfassen.

Dann sind insgesamt sechs virtuelle Prüfkörper" zu erzeugen, woraus ein Minimum von 18 Lasertracker-Positionen, im Regelfall sogar 24 Lasertracker-Positionen erforderlich wird. Dies erfordert einen sehr großen zeitlichen Aufwand. Zudem muss bei der Aufstellung der Lasertracker und bei der Verwaltung der komplexen Datenstrukturen eine große Sorgfalt angewendet werden.

Die EP 1 239 263 A2 beschreibt eine Positionsmessmaschine mit einem Zielpositionsdetektor zum Ermitteln einer Zielposition in einem Koordinatenraum in Bezug auf eine vorbestimmte Referenzoberfläche. Die Positionsmesseinrichtung misst eine Zielposition innerhalb eines festgelegten dreidimensionalen Raumes auf der Basis eines dreiachsigen Koordinatensystems. Eine Bewegungsmaschine bewegt sich in Übereinstimmung mit einem vorbestimmten Verhältnis in Bezug auf die Referenzoberfläche, um die Zielposition durch den Zielpositionsdetektor zu ermitteln. Dadurch wird der Zielpositionsdetektor bewegt. Eine Kompensationsgröße zur Ermittlung der geometrischen Fehler auf der Basis der Positionskoordinaten wird errechnet und in Abhängigkeit von der ausgeführten Bewegung der Messmaschine angewendet.

Die EP 684 447 A2 beschreibt ein Verfahren zur Koordinatenmessung an Werkstücken mit einem Koordinatenmessgerät, bei dem die ermittelten Messwerte mit gespeicherten Korrekturwerten verrechnet werden. Die Korrekturwerte beschreiben das elastische Biegeverhalten des Koordinatenmessgerätes, indem die das Biegeverhalten charakterisierenden Größen für mehrere Stellungen des Tasters im Messbereich der Maschine bestimmt werden, die taststiftunabhängigen Anteile dieser Größen ermittelt und in Form von Korrekturwerten abgespeichert werden, die das von der Position der Messschlitten und zumindest von der auf das Werkstück ausgeübten Messkraft abhängige Biegeverhalten des Koordinatenmessgerätes beschreiben und die Korrekturwerte bei der anschließenden Koordinatenmessung an Werkstücken mit den Messwerten des Koordinatenmessgerätes verrechnet werden.

Die DE 101 26 753 A1 beschreibt ein Verfahren zur Steigerung der Genauigkeit von Koordinatenmessgeräten und Werkzeugmaschinen, bei dem zumindest ein zusätzliches Messsystem in das Koordinatenmessgerät oder die Werkzeugmaschine integriert wird. Aus diesem Messsystem wird zumindest eine zusätzliche geometrische Information über die Ist-Position bzw. den Ist-Verfahrweg des Koordinatenmessgerätes oder einer Werkzeugmaschine gewonnen. Eine oder mehrere zusätzliche geometrische Informationen zusammen mit den Maßstabssignalen und/oder Tastersignalen des Koordinatenmessgerätes oder der Werkzeugmaschine werden ausgewertet und in einem überbestimmten Gleichungssystem formuliert. Bei der Lösung des überbestimmten Gleichungssystems werden die Residuen aller Gleichungen mathematisch minimiert.

Aufgabe der vorliegenden Erfindung ist es, ein Verfahren zur Ermittlung von geometrischen Abweichungen von technischen Mehrkörpersystemen bereitzustellen, das schneller und einfacher durchzuführen ist und zuverlässige Ergebnisse liefert.

Erfindungsgemäß wird die Aufgabe dadurch gelöst, dass der Endeffektor in einem zu den Bewegungsachsen des technischen Mehrkörpersystems ausgerichteten Raster bewegt wird und nacheinander Messpunkte angefahren werden, die nicht alle in einer Ebene liegen, das der Unterschied zwischen dem gemessenen Abstand und der Sollposition des Endeffektorreferenzpunktes an jedem Messpunkt ermittelt wird und anhand eines kinematischen Modells des technischen Mehrkörpersystems und die ermittelten Unterschiede Fehlerparameter jeder Bewegungsachse an ihren Messpunkten ermittelt werden. Durch die Berücksichtigung des kinematischen Modells des technischen Mehrkörpersystems wird die Anzahl der benötigten Messungen deutlich geringer als bei dem Verfahren gemäß dem Stand der Technik. Durch das erfindungsgemäße Verfahren kann der Zeitbedarf für eine komplette Vermessung und Kalibrierung um den Faktor 3 bis 5 gesenkt werden, wobei sich gleichzeitig die Durchführung erheblich vereinfacht.

Eine Weiterbildung der Erfindung sieht vor, dass ein linearisiertes Gleichungssystem aufgestellt wird, dem das kinematische Modell des technischen Mehrkörpersystems und der ermittelten Unterschiede zugrundeliegen und in dem die Fehlerparameter jeder Bewegungsachse an den Messpunkten und die Position der Basisreferenzpunkte und der Reflektorreferenzpunkt als Unbekannte gelöst werden. Dabei ist es vorgesehen, dass zumindest so viele Längenmessungen von jedem der Basisreferenzpunkte aus durchgeführt werden, dass durch eine mathematische Lösung auch die unbekannte relative Position des Basisreferenzpunktes bestimmt werden kann.

Vorteilhafterweise werden so viele Messungen an verschiedenen Messpunkten zu einem oder mehreren Referenzpunkten vorgenommen, so dass durch die Gesamtheit der Messungen die achsbezogenen Fehlerparameter des technischen Mehrkörpersystems an den Messpunkten bestimmt werden können, also dass das linearisierte Gleichungssystem aufgelöst werden kann.

Eine Weiterbildung des Verfahrens sieht vor, dass die Messungen von verschiedenen Basisreferenzpunkten zu gleichen oder verschiedenen Messpunkten im räumlichen Raster nacheinander durchgeführt werden, so dass mehrere Messreihen von Basisreferenzpunkten zur Lösung des gleichen Systems verwendet werden können, wobei die Anzahl der Messreihen größer ist als die Anzahl der Längenmesssysteme, die gleichzeitig zur Verfügung stehen. Auf diese Weise kann der apparative Aufwand durch eine Verringerung der Anzahl der Längenmesssysteme reduziert werden.

Vorteilhafterweise werden die Längen optisch, insbesondere interferometrisch gemessen, wobei das schwenkbare Längenmesssystem bzw. die schwenkbaren Längenmesssysteme automatisch dem Endeffektorreferenzpunkt nachgeführt werden.

Um möglichst realitätsnahe Werte zu erhalten, ist der Endeffektorreferenzpunkt näherungsweise dort am Endeffektor angeordnet, wo im Betrieb das Messsystem oder das Werkzeug angeordnet ist.

Eine Weiterbildung des Verfahrens sieht vor, dass ein Reflektor in unterschiedlichen Offsets ortsfest zu einem Bezugspunkt am Endeffektor angeordnet ist, so dass sich diejenigen Fehlerparameter bestimmen lassen, die sich nur bei einer Rotation des Endeffektors zu dem Bezugspunkt auswirken.

Durch eine nachgeschaltete Monte-Carlo-Simulation lassen sich die Unsicherheiten der durch das Verfahren bestimmten systematischen Geometrieabweichungen abschätzen.

Nachfolgend wird ein Ausführungsbeispiel der Erfindung anhand der Figuren näher erläutert. Es zeigen:

Figur 1 -   eine Prinzipskizze eines technischen Mehrkörpersystems mit Längenmesssystemen; sowie

Figur 2 -   eine Darstellung eines Bewegungsrasters für eine kartesische Kinematik.

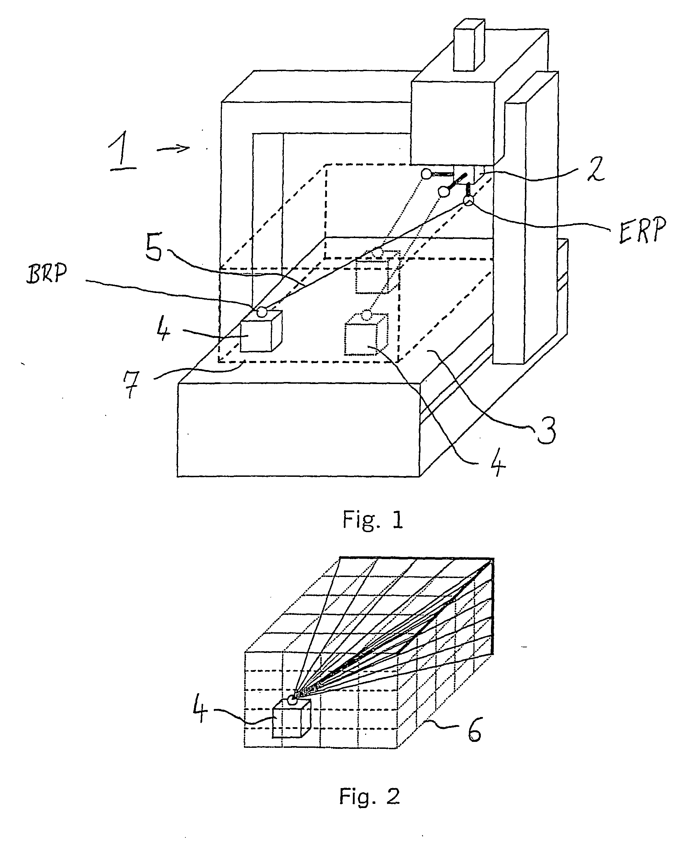

In der Figur 1 ist ein technisches Mehrkörpersystem 1 in Portalbauweise gezeigt, das einen Endeffektor 2 und eine Basis 3 aufweist. Am Endeffektor 2 ist vorzugsweise ein Kugelflächen- oder Tripelreflektor als Referenzelement befestigt, wobei insbesondere ein sogenanntes "Full-angle catseye" geeignet ist. Ein schwenkbares Längenmesssystem 4 in Gestalt eines Interferometers ist ortsfest zur kinematischen Basis 3 des technischen Mehrkörpersystems 1 befestigt, vorliegend der Arbeitstisch, auf dem normalerweise das Werkstück aufgespannt wird. Bei dem schwenkbaren Interferometer 4 kann es sich entweder um einen handelsüblichen Lasertracker oder um eine speziell für diesen Zweck entwickelte Vorrichtung handeln. Das Arbeitsvolumen 7 des technischen Mehrkörpersystems 1 ist im vorliegenden Fall an den Bewegungsachsen ausgerichtet und wird, wie in der Figur 2 dargestellt, in ein an diesen Bewegungsachsen ausgerichtetes Raster 6 eingeteilt.

Es wird eine Untermenge von Rasterpunkten festgelegt, durch die der Endeffektor 2 des technischen Mehrkörpersystems 1 bewegt wird. Die Untermenge der Rasterpunkte, also die anzufahrenden Messpunkte, deckt im Allgemeinen den maximalen Bewegungsbereich jeder Achse ab. An jedem Rasterpunkt oder Messpunkt hält das technische Mehrkörpersystem 1 für einen kurzen Moment an und eine Positionsanzeige des technischen Mehrkörpersystems 1 wird möglichst zeitgleich mit dem eingesetzten Längenmesssystem 4 ausgelesen und abgespeichert. Die Synchronisation des technischen Mehrkörpersystems 1 mit dem Längenmesssystem 4 kann beispielsweise durch eine Datenverbindung, durch manuelle Bestätigung oder durch automatische Detektion der Stillstandsphase durch das Längenmesssystem 4 erfolgen.

Nach einem vollständigen Durchlauf der festgelegten Messpunkte wird die Reflektorposition am Endeffektor 2, also der Endeffektorreferenzpunkt (ERP) oder aber die Position des schwenkbaren Längenmesssystems 4, also der Basisreferenzpunkt (BRP) verändert und der Durchlauf der gleichen oder mit einer veränderten Untermenge von Endeffektorreferenzpunkten ERP wiederholt. Auf diese Weise erhält man einen zweiten Satz von Daten. Weitere Variationen des Endeffektorreferenzpunktes ERP und des Basisreferenzpunktes BRP können folgen.

Die Anzahl der Durchläufe, die Positionen der Endeffektorreferenzpunkte ERP, der Basisreferenzpunkte BRP und die Messpunkte innerhalb des Rasters 6, die angefahren werden, hängen stark von der kinematischen Struktur des technischen Mehrkörpersystems 1, der Erreichbarkeit und der geforderten Genauigkeit ab. Je mehr Messungen unterschiedlicher Konfigurationen durchgeführt werden, desto sicherer wird das Ergebnis und desto mehr werden Unsicherheiten des Längenmesssystems 4 durch Mittelung in ihrem Einfluss verringert.

Das Ergebnis der Messung ist eine große Menge von Datensätzen, wobei jeder Datensatz als Information zumindest die Position der Verfahrachsen des technischen Mehrkörpersystems 1 zum Zeitpunkt der Messung und einen Längenmesswert des Längenmesssystems 4, beispielsweise des Interferometers enthält. Diese Datensätze werden einer Software übergeben, in der das kinematische Modell des betrachteten technischen Mehrkörpersystems 1 hinterlegt ist. Auf der Basis dieses kinematischen Modells werden durch die Software die Eingangsparameter für das kinematische Modell der Gestalt bestimmt, dass sich minimaler Widersprüche zwischen den beobachteten Längenmessungen und den durch das kinematische Modell simulierten Längenmessungen ergeben. Basis des mathematischen Verfahrens ist die Projektion, die simulierten oder angenommenen Längenmessungen auf die Verbindungslinien zwischen dem Endeffektorreferenzpunkt ERP und dem Basisreferenzpunkt BRP und der Vergleich mit der korrespondierenden, tatsächlich durchgeführten Längenmessung.

Voraussetzung für die Anwendung des Verfahrens ist die Beschreibung des betrachteten technischen Mehrkörpersystems in einer kinematischen Modellgleichung der Geometriefehler, üblicherweise in Matrizenform. Dabei werden die unbekannten Abweichungen des Endeffektors 2 als Funktion von Fehlerparametern oder Abweichungsparametern der einzelnen Bewegungsachsen ausgedrückt. Die einzelnen Fehlerparameter oder Abweichungsparameter sind dabei im Allgemeinen eine Funktion der jeweiligen Bewegungsachse. Ziel des erfindungsgemäßen Verfahrens ist es, die Eingangsparameter für das kinematische Modell durch reine Abstandsmessungen zu basisfesten Referenzpunkten BRP so zu bestimmen, dass sie die reale, abweichungsbehaftete Bewegung des technischen Mehrkörpersystems 1 bestmöglich beschreiben.

Eine Einteilung des Arbeitsvolumens 7 eines technischen Mehrkörpersystems 1 in ein räumliches Raster 6, das an den Bewegungsachsen des technischen Mehrkörpersystems 1 ausgerichtet ist, ergibt bei einem kartesischen System der Bewegungsachsen ein kartesisches Raster gemäß der Figur 2; bei einem System mit einer oder mehreren rotatorischen Bewegungsachsen kann dieses Raster auch eine andere Form annehmen. An dem Endeffektor 2 können ein oder mehrere Endeffektorreferenzpunkte ERP angeordnet sein, die über den Endeffektor 2 entlang einer Bahn zu Messpunkten im Raster 6 geführt werden, wobei diese nicht alle in einer Messebene liegen. Die Abstände 5 zwischen mindestens einem Basisreferenzpunkt BRP und einem Endeffektorreferenzpunkt ERP werden durch das schwenkbare Längenmesssystem 4 in den Messpunkten bzw. Rasterpunkten bestimmt, und die Ergebnisse der Längenmessungen werden zusammen mit den Nominalpositionen des technischen Mehrkörpersystems 1 sowie den ungefähren Positionen der Endeffektorreferenzpunkte ERP und der Basisreferenzpunkte BRP protokolliert.

Mit der nur näherungsweise bekannten Position der Referenzpunkte ERP, BRP wird auf der Basis von Startwerten für die Eingangsparameter des kinematischen Modells eine Vorhersage für die Ergebnisse der Längenmessungen gemacht. Eine Ermittlung der vermuteten Basisreferenzpunkte der Interferometer anhand der nominalen Koordinatenmessmaschinenpunkte und der Längeninformationen findet für jeden Basisreferenzpunkt separat statt. Dies erfolgt unter der anfänglichen Annahme eines technischen Mehrkörpersystems ohne Fehler unter Verwendung der nominalen Koordinaten, die von dem technischen Mehrkörpersystem angefahren und berichtet werden sowie der gemessenen Längen des Längenmesssystems, um die Basisreferenzpunkte bestmöglich zu bestimmen. Dies wird durch ein lineares Gleichungssystem und ein wiederholtes Durchlaufen des Berechnungsverfahrens erreicht. Bei jeder Iteration wird der Translationsvektor V des Basisreferenzpunktes bzw. der Position des Interferometers berechnet, um die Restlängendifferenzen zu minimieren. Anschließend wird die angenommene Position des Interferometers bzw. des Basisreferenzpunktes um den Translationsvektor verfeinert und ein erneuter Durchgang wird durchgeführt.

Dieses lineare Gleichungssystem wird entsprechend gelöst und der Vektor V aktualisiert die Position des Längenmesssystems. Das Verfahren wird mit aktualisierten Positionen erneut durchgeführt, wobei 3 bis 4 Wiederholungen in der Regel ausreichend sind.

Der mathematische Zusammenhang und die Lösung der Gleichungen basieren auf der Annahme eines Festkörpermodells, dass durch die folgenden Gleichungen beschrieben werden kann:

Die Positionsabweichung hängt von der Position des TMS im Punkt xi und der Abweichung des verwendeten Meßtasters

$$\vec{x}_{pi}:$$
$$\vec{e}_G(\vec{x}_i) = \vec{e}_{GT}(\vec{x}_i) + \mathrm{E}_{GR}(\vec{x}_i) \cdot \vec{x}_i \cdot \mathrm{E}_{GP}(\vec{x}_i) \cdot \vec{x}_{pi} \qquad \text{eq.(1)}$$

ab. Die Ortsabweichungen, die durch die Verschiebungsabweichungen der Achsen verursacht werden, sind zusammengefaßt in dem Vektor $\vec{e}_{GT}(\vec{x}_i)$:

$$\vec{e}_{GT}(\vec{x}_i) = \begin{bmatrix} xtx + ytx + ztx \\ xty + yty + zty \\ xtz + ytz + ztz \end{bmatrix} \qquad \text{eq. (2)}$$

Die Ortsabweichungen, die durch der Drehabweichungen der Achsen und durch Winkeligkeitsabweichungen zwischen den Achsen entstehen, werden durch die Matrizen nach eq. (3) und eq. (4) beschrieben. Die Abweichungen, die von den Abweichungen der Meßtastersphäre unabhängig sind, werden durch die Matrix

$$E_{GR}(\vec{x}_i) = \begin{bmatrix} 0 & -xwy - xrz & xwz + xry + yry \\ 0 & 0 & -ywz - xrx - yrx \\ 0 & xrx & 0 \end{bmatrix} \qquad \text{eq.(3)}$$

beschrieben, die Abweichungen, die von dem verwendeten Taster abhängig sind, werden durch die Matrix

$$E_{GP}(\vec{x}_1) = \begin{bmatrix} 0 & -xrz - yrz - zrz & xry + yry + zry \\ xrz + yrz + zrz & 0 & -xrx - yrx - zrx \\ -xry - yry - zry & xrx + yrx + zrx & 0 \end{bmatrix} \qquad \text{eq.(4)}$$

beschrieben.

Für die Verwendung ohne Berücksichtigung elastischer Verformungen werden folgende Annahmen getroffen:

1. Das Raumnetz der Meßpunkte weist eine Anzahl äquidistanter Punkte in jeder Richtung x, y und z auf.
2. Es werden nur eine sinnvolle Anzahl an Knoten vermessen.

Die Anzahl an Knoten in jeder Richtung werden mit $d_x$, $d_y$, $d_z$ bezeichnet.
Die Gesamtanzahl der gemessenen Längen ist n.
Die Anzahl unterschiedlicher BRP ist m.

Die kinematischen Fehler an den Knoten läßt sich darstellen als:

$$Par = \begin{bmatrix} xtx_1 \\ \vdots \\ xtx_{dx} \\ \vdots \\ zrz_1 \\ \vdots \\ zrz_{dz} \end{bmatrix} \qquad \begin{array}{c} p = \\ 6 \cdot (d_x + d_y + d_z) \\ \\ 1 \end{array}$$

mit p Zeilen und 1 Spalte
oder als

$$Par^* = \begin{bmatrix} Par \\ P_{LT} \end{bmatrix} \qquad \begin{array}{c} p = \\ 6 \cdot (d_x + d_y + d_z) \\ \\ 1 \end{array}$$

mit p Zeilen und 1 Spalte.

Der Gesamtvektor der Positionen des Messpunkte des TMS ist

$$P_N = \begin{bmatrix} x_1 \\ y_1 \\ z_1 \\ \vdots \\ x_n \\ y_n \\ z_n \end{bmatrix} \qquad \begin{matrix} 3 \cdot n \\ \\ 1 \end{matrix}$$

mit 3*n Zeilen und 1 Spalte.

Der Gesamtvektor der TMS-Fehler an den nominalen Punkten ist

$$E = \begin{bmatrix} ex_1 \\ ey_1 \\ ez_1 \\ \vdots \\ ex_n \\ ey_n \\ ez_n \end{bmatrix} \qquad \begin{matrix} 3 \cdot n \\ \\ 1 \end{matrix}$$

mit 3*n Zeilen und 1 Spalte.

Der Gesamtvektor der Positionen des Längenmesssystems ist

$$P_{LT} \begin{bmatrix} x_1 \\ y_1 \\ z_1 \\ \vdots \\ x_n \\ y_n \\ z_n \end{bmatrix} 1 \qquad \begin{matrix} 3 \cdot m \\ \\ 1 \end{matrix}$$

mit 3*m Zeilen und 1 Spalte.

Der räumliche Abstand zwischen dem BRP oder der Position des Längenmesssystems und der nominalen Position ergibt sich aus

$$\Delta P = P_N - P_{LT} \qquad \begin{matrix} 3 \cdot n \\ \\ 1 \end{matrix}$$

mit 3*n Zeilen und 1 Spalte.

Der normierte Differenzvektor ist

$$\Delta P_{Norm} = Norm(\Delta P_N) \qquad \begin{matrix} 3 \cdot n \\ \\ 1 \end{matrix}$$

mit 3*n Zeilen und 1 Spalte.

Die Matrix mit $\square P_{Norm}$ auf der Hauptdiagonalen ist

$$d\Delta P_{Norm} = \begin{bmatrix} \Delta P_{Norm,1} & 0 & 0 \\ 0 & \ddots & 0 \\ 0 & 0 & \Delta P_{Norm,n} \end{bmatrix} \qquad \begin{matrix} 3 \cdot n \\ \\ 3 \cdot n \end{matrix}$$

mit 3*n Zeilen und Spalten.

Die Matrix, die die kinematischen Fehler mit den Fehlervektoren an jedem Meßpunkt korreliert ergibt sich zu

$$C_{par} = \begin{bmatrix} c_{11} & \cdots & c_{1,p} \\ \vdots & \ddots & \vdots \\ c_{3\cdot n,1} & \cdots & c_{3\cdot n,p} \end{bmatrix} \qquad \begin{matrix} 3 \cdot n \\ \\ p \end{matrix}$$

mit 3*n Zeilen und p Spalten.

Die erweiterte Korrelationsmatrix für die BRP oder Positionen der Längenmesssysteme lautet

$$C^*_{par} = \begin{bmatrix} C_{par} & c^*_{11} & c^*_{1,3\cdot m} \\ & \vdots & \vdots \\ & c^*_{3\cdot n,1} & c^*_{3\cdot n,3\cdot m} \end{bmatrix} \qquad \begin{matrix} 3 \cdot n \\ \\ p+3\cdot m \end{matrix}$$

mit 3*n Zeilen und p + 3*m Spalten.

Die Hilfsmatrix für die Projektion ist

$$K = \begin{bmatrix} 1 & 0 \\ 1 & 0 \\ 1 & 0 \\ & \ddots \\ & 0 & 1 \\ & 0 & 1 \\ & 0 & 1 \end{bmatrix} \qquad \begin{matrix} 3*n \\ \\ n \end{matrix}$$

mit 3*n Zeilen und n Spalten.

Die gemessenen Unterschiede zwischen den nominalen und aktuellen Entfernungen zwischen dem BRP bzw. der Position des Längenmesssystems und der Stellung des TMS ist

$$\Delta L = \begin{bmatrix} \Delta l \\ \vdots \\ \Delta l_n \end{bmatrix} \qquad \begin{matrix} n \\ \\ 1 \end{matrix}$$

mit n Zeilen und 1 Spalte.

Die Pfadlänge der BRP oder der Positionen der Längenmesssysteme ergibt sich zu

$$L_0 = \begin{bmatrix} l_{0,1} \\ \vdots \\ l_{0,m} \end{bmatrix} \qquad \begin{matrix} m \\ \\ 1 \end{matrix}$$

mit m Zeilen und 1 Spalte.

Die korrelierende Matrix der Pfadlänge zu den BRP oder Positionen der Längenmesssysteme ist

$$C_0 = \begin{bmatrix} c_{11} & \cdots & c_{1,m} \\ \vdots & \ddots & \vdots \\ c_{n,1} & \cdots & c_{n,m} \end{bmatrix} \qquad \begin{matrix} 3 \cdot n \\ \\ p \end{matrix}$$

mit 3*n Zeilen und p Spalten

Der Vektor der angenäherten, verbesserten BRP oder Positionen der Längenmesssysteme ist

$$V = \begin{bmatrix} vx \\ vy \\ vz \end{bmatrix} \qquad \begin{matrix} 3 \\ \\ 1 \end{matrix}$$

mit 3 Zeiten und 1 Spalte.

Der erweiterte Vektor ergibt sich zu

$$V_E = \begin{bmatrix} V_1 \\ \vdots \\ V_n \end{bmatrix} \qquad \begin{matrix} N \\ \\ 1 \end{matrix}$$

mit n Zeilen und 1 Spalte.

Die Vorhersage der Abweichung wird mit den tatsächlich gemessenen Abständen zwischen dem Endeffektorreferenzpunkt ERP und dem Basisreferenzpunkt BRP verglichen. In aller Regel zeigen sich Widersprüche, die folgende Ursache haben können:

> 1. die relative Position der Referenzpunkte (ERP, BRP) zueinander entspricht nicht den Schätzwerten;
> 2. die Bewegung des technischen Mehrkörpersystems 1 ist durch die gewählten Eingangsparameter des kinematischen Modells nicht ausreichen beschrieben; oder
> 3. es sind Messabweichungen des Längenmesssystems 4 vorhanden.

Erfindungsgemäß werden nun die Eingangsparameter des kinematischen Modells und die Position der Referenzpunkte ERP, BRP durch ein mathematisches Verfahren solange optimiert, bis sich für die Gesamtlösung minimale Widersprüche ergeben. Dies kann in einem iterativen Verfahren durch eine Linearisierung und die numerische Lösung eines linearen Gleichungssystems erfolgen. Das Ergebnis der erfindungsgemäßen Lösung ist ein Parametersatz, der das kinematische Verhalten des technischen Mehrkörpersystems 1 nach der verfügbaren Längeninformation bestmöglich beschreibt.

In einem ersten Schritt werden die geschätzten BRP bzw. Positionen der Längenmesssysteme anhand der nominalen Punkte des TMS oder der Messpunkte und den Längendaten ermittelt, wobei die Schätzung für die BRP während der Hauptberechnung verfeinert wird. Der erste Schritt der angenäherten Bestimmung der BRP wird für jeden BRP oder Position des Längenmesssytems getrennt durchgeführt. Dabei wird die anfängliche Annahme eines fehlerfreien TMS getroffen, dass die nominalen Messpunkte, die durch das TMS angefahren werden, und die gemessenen Längen des Längenmesssystems, z.B. Interferometer, zur bestmöglichen Bestimmung der BRP oder der Positionen der Längenmesssysteme verwendet werden. Dies wird durch ein System linearer Gleichungen und einen Iterationsprozeß durchgeführt. Bei jedem Iterationsprozeß wird der Translationsvektor V des BRP oder der Position des Längenmesssystems berechnet, um die Restlängenunterschiede zu minimieren. Auf Basis der angenäherten bzw. verbesserten Positionsdaten wird dieses Verfahren wiederholt, um eine möglichst genaue Bestimmung des BRP zu erhalten. Dies kann durch folgende Gleichungen ausgedrückt werden:

$$P_{LT} = P_{LT}{}^{*} + V$$
$$(\text{A1})$$

Die Verschiebung V ist identisch für alle Längenmessungen.

$$V_{E} = \left(V^{T} * H\right)^{T}$$
$$(\text{A2})$$

Diese wird auf die jeweiligen Messlinien projiziert, die durch □P gebildet werden.

$$\left(\Delta P_{Norm} \cdot V_{E}\right)^{T} \cdot K = \Delta L^{T}$$
$$(\text{A3})$$

Gleichung A2 in Gleichung A3 eingesetzt ergibt .

$$\left(\Delta P_{Norm} \cdot \left(V^{T} * H\right)^{T}\right)^{T} \cdot K = \Delta L^{T}$$
$$(\text{A4})$$

was sich nach Umordnung zu

$$\left(C \cdot \Delta P_{Norm} \cdot K\right)^T \cdot V = \Delta L$$
$$(A5)$$

ergibt.

Dieses lineare System kann gelöst werden und der Vektor V aktualisiert die berechneten Positionen. Diese Verfahren wird wiederholt, wobei üblicherweise 3 bis 4 Iterationsschritte notwendig sind, um eine ausreichende Genauigkeit zu erhalten.

An die vorgeschriebene Bestimmung der Position schließt sich die Ermittlung von Federparametern anhand der gemessenen Längeninformationen und der angenäherten BRP bzw. Positionen der Längenmesssysteme an. Der Gesamtvektor E aller TMS-Fehler an allen *n* Messpunkten oder Kreuzungspunkten des Koordinatensystems kann ausgerückt werden als

$$C_{par} \cdot Par = E$$
$$(B1)$$

C beschreibt den Effekt der parametrischen Fehler auf die Fehlervektoren in den Messpunkten oder Knotenpunkten. In C sind die Modellannahmen eingebettet: Für eine Übertragung eines translatorischen Fehlers muss eine 1 in die Position $C_{ii}$ eingesetzt werden, für rotatorische Fehler ein entsprechender mechanischer Hebel gemäß dem oben beschriebenen kinematischen Modell.

Die Fehlervektoren werden auf die Messlinie projiziert, die durch □P gebildet ist. Die Fehler werden als Längendifferenz zwischen der nominalen und der gemessenen Länge für jede einzelne Messung auftauchen. Diese Differenzen werden in dem Vektor □L zusammengefasst zu

$$\left(d \Delta P_{Norm} \cdot E\right)^T \cdot K = \Delta L^T$$
$$(B2)$$

Das Gleiche wird mit der Verschiebung $V_E$ der Positionen der Längenmesssysteme durchgeführt (vgl. (A3))

$$\left(d \Delta P_{Norm} \cdot V_E\right)^T \cdot K = \Delta L^T$$
$$(B3)$$

Die Gleichungen B2 und B3 können zu einem linearen System kombiniert werden

$$\left(d \Delta P_{Norm} \cdot \left(E + V_E\right)\right)^T \cdot K = \Delta L^T$$
$$(B4).$$

In der Gleichung B1 können $C_{Par}$ und Par erweitert werden, um die Verbesserung der BRP oder der Position des Längenmesssystems zu berücksichtigen. Es ergibt sich

$$C*_{par} \cdot Par* = E + V_E$$
$$(B5).$$

Gleichung B5 in Gleichung B4 eingesetzt ergibt

$$\left(d\Delta P_{Norm} \cdot C*_{par} \cdot Par*\right)^T \cdot K = \Delta L^T$$
$$(B6).$$

Diese transformiert ergibt sich zu

$$\left(C*_{par}^{\ T} \cdot d\Delta P_{Norm} \cdot K\right)^T = \Delta L$$
$$(B7).$$

Mit

$$\left(C*_{par}^{\ T} \cdot d\Delta P_{Norm} \cdot K\right)^T = M$$
$$(B8)$$

kann man schreiben

$$M \cdot Par* = \Delta L$$
$$(B9).$$

Aufgrund der inkrementalen Natur der Daten der Längenmesssysteme, üblicher Weise Interferometer, sind die absoluten Werte von $\Delta L$ unbekannt. Für jede Messserie wird eine unbekannte Totpfadlänge $L_0$ eingeführt und einem Vektor $L_0$ kombiniert. Die Matrix $C_0$ verbindet die unbekannten Totpfadlänge mit den einzelnen Längenmessungen, so dass die Gleichung B9 auch auf die bestmögliche Anpassung mit der Totpfadlänge ausgedehnt werden kann.

$$\begin{bmatrix} M & C_0 \end{bmatrix} \cdot \begin{bmatrix} Par* \\ L_0 \end{bmatrix} = \Delta L$$
$$(B10)$$

Zusätzliche Randbedingungen für die parametrischen Fehler können durch Hinzufügen weiterer Gleichungen zu dem Gleichungssatz formuliert werden. Nützliche Randbedingungen sind beispielsweise, dass alle parametrischen Fehler mit 0 starten und dass alle Geradheitsfehler mit 0 enden. Unter Einfügung dieser Randbedingungen in B10 ergibt sich

$$\begin{bmatrix} M & C_0 \\ B & 0 \end{bmatrix} \cdot \begin{bmatrix} Par* \\ L_0 \end{bmatrix} = \begin{bmatrix} \Delta L \\ 0 \end{bmatrix} \qquad \text{(B11).}$$

Die Gleichung B11 bestellt ein linearisierten Satz Gleichungen dar, der beispielsweise durch einen iterativen "best fit"-Algorithmus gelöst werden kann.

Vorteilhafterweise werden von jedem Basisreferenzpunkt BRP mindestens so viele Längenmessungen durchgeführt, dass die räumliche Position des Basisreferenzpunktes BRP unter Annahme eines ideal bekannten technischen Mehrkörpersystems 1 bestimmt werden kann und die Gesamtheit aller Längenmessungen ausreicht, um die geometrischen Abweichungen des technischen Mehrkörpersystems 1 in den Rasterpunkten in allen Achspositionen zu bestimmen.

Neben der zeitlich hintereinanderfolgenden Messung mit nur einem Längenmesssystem 4 ist auch der gleichzeitige Einsatz mehrerer Längenmesssysteme 4 möglich, wodurch die Anzahl der Messdurchläufe reduziert werden kann. Für den Einsatz zweier oder mehrerer Längenmesssysteme 4 können am Endeffektor 2 gleichzeitig zwei oder mehr Referenzelemente oder Reflektoren bei der Verwendung optischer Längenmesssysteme 4 verwendet werden.

Das erfindungsgemäße Verfahren ermöglicht die wirtschaftliche, hochgenaue praktikable Erfassung von systematischen Abweichungen in technischen Mehrkörpersystemen wie zum Beispiel Koordinatenmessgeräten, Robotern, Werkzeugmaschinen und Dreh-Schwenk-Gelenken auf der Basis eines kinematischen Modells. Das Verfahren kann nahezu unabhängig von der Baugröße und dem kinematischen Aufbau des technischen Mehrkörpersystems 1 angewendet werden. Die Erfassung rotatorischer und translatorischer Abweichungen kann ausschließlich basierend auf Längenmessungen unter Verwendung eines einzigen Messmittels, bevorzugt einem Interferometer, vorgenommen werden. Der Zeit- und Investitionsbedarf dafür ist bei hoher Genauigkeit äußerst gering. Die Einrichtung und Justierung des Längenmesssystems 4 muss nicht erfolgen, weil das Verfahren in der Lage ist, auch eine ungefähr bekannte Lage des Längenmesssystems 4 implizit zu lösen.

Das Verfahren kann auf die räumlichen Gegebenheiten und die gerätespezifischen Genauigkeitsanforderungen optimiert werden, das heißt, das für Geräte geringerer Genauigkeitsklassen das gleiche Verfahren mit einem geringeren Aufwand angewendet werden kann, wobei bei höheren Anforderungen lediglich die Anzahl der Messungen erhöht wird.

Das erfindungsgemäße Verfahren eignet sich im Gegensatz zu Verfahren, die direkt die physikalische Bewegung der Kinematik beobachten, auch zur Überprüfung technischer Mehrkörpersysteme 1, die bereits numerisch korrigiert wurden.

Ein weiterer Vorteil bei der praktischen Anwendung ist die sehr einfache Datenstruktur der Messdaten. Die Messungen können ungeordnet erfolgen und durch einfache Sortierroutinen in der Software können die Daten in die zur Lösung des Gleichungssystems notwendige Form gebracht werden. Die ergänzenden Angaben, die der Anwender zur Lösung machen muss, beschränken sich dabei auf ein Minimum. Durch die im Allgemeinen starke Überbestimmung des Gleichungssystems ist es zudem problemlos möglich, einzelne Ausreißer zu erkennen und zu entfernen, ohne dass die Gesamtlösung gefährdet wird. Die Überbestimmung lässt außerdem eine gute Abschätzung der Konsistenz des Gleichungssystems zu.

Ein besondere Qualität erhält das Verfahren, wenn es um eine Unsicherheitsabschätzung auf der Basis von Monte-Carlo-Verfahren erweitert wird. Durch einfache Variation der Längenmessung, zum Beispiel Würfeln von zufälligen Fehlern auf alle Längenmessungen, und wiederholte Lösung des Gleichungssystems lassen sich die ermittelten systematischen Abweichungen mit Sicherheitsbereichen versehen. Diese Abschätzung eignet sich insbesondere auch, um günstige Konfigurationen für eine gegebene Kinematik zu bestimmen.

**Patentansprüche**

1. Verfahren zur Ermittlung systematischer geometrischer Abweichungen in technischen Mehrkörpersystemen (1) mit einem Endeffektor (2) und einer Basis (3), insbesondere Koordinatenmessgeräten, Werkzeugmaschinen und Robotern, unter Verwendung eines oder mehrerer, schwenkbarer Längenmesssysteme (4), bei dem der Endeffektor (2) Messpunkte anfährt und an jedem Messpunkt zwischen Basisreferenzpunkten (BRP), die ortsfest zu der Basis (3) sind, und Endeffektorreferenzpunkten (ERP), die ortsfest zu dem Endeffektor (2) sind, der Abstand (5) durch zumindest ein Längenmesssystem (4) gemessen wird,

   **dadurch gekennzeichnet,**

      - **dass** der Endeffektor (2) in einem zu den Bewegungsachsen des technischen Mehrkörpersystemes (1) ausgerichteten Raster (6) bewegt wird und nacheinander Messpunkte angefahren werden, die nicht alle in einer Ebene liegen,

- **dass** der Unterschied zwischen dem gemessenen Abstand (5) und der Sollposition des Endeffektorreferenzpunktes (ERP) an jedem Messpunkt ermittelt wird und

- **dass** anhand eines kinematischen Modells des technischen Mehrkörpersystemes (1) und der ermittelten Unterschiede Fehlerparameter jeder Bewegungsachse an den Messpunkten ermittelt werden.

2. Verfahren nach Anspruch 1, **dadurch gekennzeichnet, dass** ein linearisiertes Gleichungssystem aufgestellt wird, dem das kinematische Modell des technischen Mehrkörpersystems (1) und der ermittelten Unterschiede zugrunde liegen und in dem die Fehlerparameter jeder Bewegungsachse an den Messpunkten und die Position der Basisreferenzpunkte (BRP) und der Endeffektorreferenzpunkte (ERP) als Unbekannte gelöst werden.

3. Verfahren nach Anspruch 2, **dadurch gekennzeichnet, dass** zumindest so viele Längenmessungen von jedem der Basisreferenzpunkte (BRP) aus durchgeführt werden, dass durch eine mathematische Lösung auch die unbekannte relative Position des Basisreferenzpunktes (BRP) bestimmt werden kann.

4. Verfahren nach Anspruch 2 oder 3, **dadurch gekennzeichnet, dass** zumindest so viele Messungen an verschiedenen Messpunkten zu einem oder mehreren Referenzpunkten (BRP, ERP) vorgenommen werden, dass durch die Gesamtheit der Messungen die achsbezogenen Fehlerparameter des technischen Mehrkörpersystemes (1) an den Messpunkten bestimmt werden können.

5. Verfahren nach einem der voranstehenden Ansprüche, **dadurch gekennzeichnet, dass** Eingangsparameter des kinematischen Modells dergestalt variiert werden, dass sich minimale Widersprüche zwischen den gemessenen Abständen (5) und nominellen Abständen geben.

6. Verfahren nach einem der voranstehenden Ansprüche, **dadurch gekennzeichnet, dass** die Messungen von verschiedenen Basisreferenzpunkten (BRP) zu gleichen oder verschiedenen Messpunkten im räumlichen Raster nacheinander durchgeführt werden, so dass mehr Messreihen von Basisreferenzpunkten (BRP) zur Lösung des Gleichungssystems verwendet werden können, als Längenmesssysteme (4) gleichzeitig zur Verfügung stehen.

7. Verfahren nach einem der voranstehenden Ansprüche, **dadurch gekennzeichnet, dass** die Längen interferrometrisch gemessen werden.

8. Verfahren nach einem der voranstehenden Ansprüche, **dadurch gekennzeichnet, dass** das schwenkbare Längenmesssystem (4) automatisch dem Endeffektorreferenzpunkt (ERP) nachgeführt wird.

9. Verfahren nach einem der voranstehenden Ansprüche, **dadurch gekennzeichnet, dass** der Endeffektorreferenzpunkt (ERP) näherungsweise dort am Endeffektor (2) angeordnet ist, wo im Betrieb das Messsystem oder das Werkzeug angeordnet ist.

10. Verfahren nach Anspruch 7, **dadurch gekennzeichnet, dass** ein Reflektor in unterschiedlichen Offsets ortsfest zu einem Bezugspunkt am Endeffektor (2) angeordnet ist, so dass sich diejenigen Fehlerparameter bestimmen lassen, die sich nur bei einer Rotation des Endeffektors (2) zu dem Bezugspunkt auswirken.

11. Verfahren nach einem der voranstehenden Ansprüche, **dadurch gekennzeichnet, dass** durch eine nachgeschaltete Monte-Carlo-Simulation die Unsicherheit der durch das Verfahren bestimmten systematischen Geometrieabweichungen abgeschätzt wird.

**Claims**

1. Method for determination of systematic geometric discrepancies in technical multiple-body systems (1) having an end effector (2) and a base (3), in particular coordinate measurement apparatuses, machine tools and robots, using one or more length measurement systems (4) which can pivot, in which the end effector (2) approaches measurement points and the distance (5) is measured at each measurement point between base reference points (BRP), whose position is fixed with respect to the base (3), and end effector reference points (ERP), whose positions are fixed with respect to the end effector (2) at each measurement point, by means of at least one length measurement system (4),

**characterized**

- **in that** the end effector (2) is moved in a grid (6) which is aligned with respect to the movement axes of the technical multiple-body system (1), and measurement points which do not all lie on one plane are approached successively,
- **in that** the difference between the measured distance (5) and the nominal position of the end effector reference point (ERP) is determined at each measurement point, and
- **in that** error parameters for each movement axis at the measurement points are determined on the basis of a kinematic model of the technical multiple-body system (1) and of the determined differences.

2. Method according to Claim 1, **characterized in that** a linearized equation system is set up, on which the kinematic model of the technical multiple-body system (1) and of the determined differences is based, and in which the error parameters of each movement axis are solved at the measurement points, and the position of the base reference points (BRP) and of the end effector reference points (ERP) are solved as unknowns.

3. Method according to Claim 2, **characterized in that** at least a sufficient number of length measurements are carried out from each of the base reference points (BRP) that the unknown relative position of the base reference point (BRP) can also be determined by a mathematical solution.

4. Method according to Claim 2 or 3, **characterized in that** at least as many measurements are carried out at different measurement points with respect to one or more reference points (BRP, ERP) that the axis-related error parameters of the technical multiple-body system (1) can be determined at the measurement points by the totality of the measurements.

5. Method according to one of the preceding claims, **characterized in that** input parameters to the kinematic model are varied in such a manner that this results in minimal contradictions between the measured distances (5) and the nominal distances.

6. Method according to one of the preceding claims, **characterized in that** the measurements are carried out successively from various base reference points (BRP) to the same or different measurement points in the three-dimensional grid, such that more measurement rows of base reference points (BRP) can be used to solve the equation system than length measurement systems (4) available at the same time.

7. Method according to one of the preceding claims, **characterized in that** the lengths are measured interferrometrically.

8. Method according to one of the preceding claims, **characterized in that** the length measurement system (4) which can pivot is automatically slaved to the end effector reference point (ERP).

9. Method according to one of the preceding claims, **characterized in that** the end effector reference point (ERP) is arranged on the end effector (2) approximately where the measurement system or the tool is arranged during operation.

10. Method according to Claim 7, **characterized in that** a reflector is arranged with different offsets in a fixed position with respect to a reference point on the end effector (2), such that it is possible to determine those error parameters which produce an effect only during rotation of the end effector (2) with respect to the reference point.

11. Method according to one of the preceding claims, **characterized in that** the uncertainty of the systematic geometric discrepancies determined by the method is estimated by a downstream Monte-Carlo simulation.

**Revendications**

1. Procédé pour déterminer des écarts géométriques systématiques dans des systèmes techniques à plusieurs corps (1) comportant un effecteur final (2) et une base (3), en particulier des appareils de mesure de coordonnées, des machines-outils et des robots, par l'utilisation d'un ou plusieurs, systèmes de mesure de longueurs (4) orientables, dans lequel l'effecteur final (2) commence des points de mesure et à chaque points de mesure entre les points de référence de la base (BRP), qui sont fixes par rapport à la base (3), et les points de référence de l'effecteur final (ERP), qui sont fixes par rapport à l'effecteur final (2), la distance (5) est mesurée grâce à au moins un système de mesure de longueurs (4),
**caractérisé en ce que**,

- l'effecteur final (2) est déplacé dans une trame (6) alignée suivant les axes de mouvement du système technique à plusieurs corps (1) et des points de mesure successifs, qui ne sont pas tous dans un plan, sont commencés,
- la différence entre la distance mesurée (5) et la position désirée des points de référence de l'effecteur final (ERP) est déterminée à chaque point de mesure et
- à partir d'un modèle cinématique du système technique à plusieurs corps (1) et des différences déterminées des paramètres d'erreur de chaque axe de mouvement sont déterminés aux points de mesure.

2. Procédé selon la revendication 1, **caractérisé en ce qu'**un système de ressemblance linéarisé est établi, dont le modèle cinématique des systèmes techniques à plusieurs corps (1) et les différences déterminées sont à la base et dans lequel les paramètres d'erreur de chaque axe de mouvement aux points de mesure et la position des points de référence de la base (BRP) et des points de référence de l'effecteur final (ERP) sont résolus en tant qu'inconnus.

3. Procédé selon la revendication 2, **caractérisé en ce qu'**au moins suffisamment de mesures de longueur sont mises en oeuvre à partir de chacun des points de référence de la base (BRP), de manière à ce que grâce à un calcul mathématique la position relative inconnue des points de référence de la base (BRP) puisse aussi être déterminée.

4. Procédé selon la revendication 2 ou 3, **caractérisé en ce qu'**au moins suffisamment de mesures sont effectuées aux différents points de mesures à un ou plusieurs points de référence (BRP, ERP), de manière à ce que grâce à la totalité des mesures les paramètres d'erreur de chaque axe du système technique à plusieurs corps (1) puissent être déterminés aux points de mesure.

5. Procédé selon l'une des revendications précédentes, **caractérisé en ce que** des paramètres d'entrée du modèle cinématique sont variés, de manière à obtenir des contradictions minimales entre les distances mesurées (5) et distances nominales.

6. Procédé selon l'une des revendications précédentes, **caractérisé en ce que** les mesures sont mises en oeuvre successivement de différents points de référence de la base (BRP) aux mêmes ou différents points de mesure dans la trame spatiale, de sorte que plus de séries de mesures pour les points de référence de base (BRP) peuvent être utilisées pour la solution du système de ressemblance, et que les systèmes de mesure de longueur (4) peuvent être disponibles en même temps.

7. Procédé selon l'une des revendications précédentes, **caractérisé en ce que** les longueurs sont mesurées par interférométrie.

8. Procédé selon l'une des revendications précédentes, **caractérisé en ce que** le système de mesure de longueur (4) est ajusté aux points de référence de l'effecteur final (ERP) de manière automatique.

9. Procédé selon l'une des revendications précédentes, **caractérisé en ce que** le point de référence de l'effecteur final (ERP) est disposé de manière approximatif sur l'effecteur final (2) là, où le système de mesure ou l'outil est disposé en usine.

10. Procédé selon la revendication 7, **caractérisé en ce qu'**un réflecteur est disposé sur l'effecteur final (2) à différentes offsets fixes par rapport à un point de référence, de sorte que les paramètres d'erreurs, qui ne se répercutent qu'avec une rotation de l'effecteur final (2) au point de référence, peuvent être déterminés.

11. Procédé selon l'une des revendications précédentes, **caractérisé en ce que** l'incertitude sur la détermination des écarts géométriques systématiques grâce au procédé est estimée grâce à une simulation Monte-Carlo montée en série.

Fig. 1

Fig. 2